(19) **Europäisches Patentamt / European Patent Office / Office européen des brevets**

(11) **EP 2 561 010 B1**

(12) **FASCICULE DE BREVET EUROPEEN**

(45) Date de publication et mention de la délivrance du brevet:
**27.08.2014 Bulletin 2014/35**

(21) Numéro de dépôt: **11707398.1**

(22) Date de dépôt: **04.03.2011**

(51) Int Cl.:
*C08J 3/20* (2006.01)
*C08L 7/00* (2006.01)
*B29B 7/42* (2006.01)
*B29B 7/88* (2006.01)
*B60C 1/00* (2006.01)
*C08L 9/06* (2006.01)
*B29B 7/82* (2006.01)

(86) Numéro de dépôt international:
**PCT/EP2011/053282**

(87) Numéro de publication internationale:
**WO 2011/131409 (27.10.2011 Gazette 2011/43)**

(54) **PROCEDE DE FABRICATION D'UNE COMPOSITION DE CAOUTCHOUC**

VERFAHREN ZUR HERSTELLUNG EINER KAUTSCHUKZUSAMMENSETZUNG

PROCESS FOR MAKING A RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2010 FR 1052949**

(43) Date de publication de la demande:
**27.02.2013 Bulletin 2013/09**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **LOUBARESSE, Jean-Marc**
**F-63430 Les Martres D'artiere (FR)**
• **VOISIN, Floriandre**
**F-63400 Chamalieres (FR)**
• **ANNET, Pierre**
**F-63100 Clermont-Ferrand (FR)**
• **DUSSARDIER, Bruno**
**F-63720 Ennezat (FR)**
• **HUGUENOT, Gérald**
**F-63100 Clermont-Ferrand (FR)**
• **LAPRA, Arnaud**
**F-63450 Saint Saturnin (FR)**
• **LOYAU, Julien**
**F-63100 Clermont-Ferrand (FR)**
• **PELISSIER, Vincent**
**F-63540 Romagnat (FR)**

(74) Mandataire: **Reynaud, Georges**
**M. F. P. Michelin**
**23, place des Carmes-Déchaux**
**DGD/PI - F35 - Ladoux**
**63040 Clermont-Ferrand Cedex 9 (FR)**

(56) Documents cités:
EP-A1- 0 972 790        EP-A1- 1 988 117
FR-A1- 2 698 820        US-A- 5 158 725
US-A- 5 597 235         US-A- 5 916 956
US-B1- 6 686 410

EP 2 561 010 B1

**Description**

L'invention concerne le domaine du mélangeage des élastomères et plus particulièrement de la fabrication de compositions de caoutchouc destinées à la réalisation de pneumatiques servant à équiper les véhicules terrestres.

L'exigence de performance des pneumatiques modernes, au delà des qualités requises par les conditions de roulage parfois extrêmes, s'oriente de plus en plus vers la durabilité du pneumatique et la réduction de sa résistance de roulement.

Il est connu de l'homme de l'art que l'amélioration de la résistance à l'usure peut se traduire par une augmentation de la dissipation d'énergie, et que les progrès réalisés ces dernières années sont l'objet de compromis entre ces deux performances dont on s'attache à repousser les limites en modifiant les compostions de caoutchouc et en explorant de nouvelles méthodes de fabrication.

L'invention a pour objet de proposer une méthode permettant, sans affecter la performance en usure, de réduire fortement les phénomènes de dissipation d'énergie à l'intérieur du matériau, lorsque ce dernier est soumis à des contraintes cycliques,

Le procédé selon l'invention consiste à utiliser de manière particulière et originale un dispositif de mélangeage connu, et à proposer des plages de fonctionnement dudit dispositif permettant d'obtenir des compositions de caoutchouc ayant des propriétés très décalées et inattendues par rapport aux procédés d'obtention usuels.

Le procédé selon l'invention fait appel à un moyen de mélangeage en continu tel que décrit par exemple dans la publication EP 605 781.

Le procédé selon l'invention permet la fabrication d'une composition de caoutchouc formée de divers constituants tels que des élastomères de base, des charges renforçantes, des additifs et d'un système de vulcanisation.

Ce procédé comprend les étapes suivantes :

A - à l'aide d'un appareil de mélangeage en continu comprenant une chambre de mélangeage comportant au moins un rotor en rotation dans un stator et s'étendant entre une extrémité amont et une extrémité aval entre lesquelles la matière chemine progressivement, et comportant des organes de dosage et d'introduction forcée du ou des élastomères de base, refoulant lesdits élastomères de base au travers d'une canalisation débouchant à l'amont de la chambre de mélangeage, on réalise une composition de caoutchouc initiale comprenant les charges de renforcement, des additifs éventuels, à l'exception du système de réticulation, en choisissant les paramètres de fonctionnement de l'appareil de mélangeage en continu de sorte que

a - le temps de séjour de l'élastomère dans la chambre de mélangeage soit compris entre 20 et 60 secondes,
b - l'énergie spécifique conférée à la composition de caoutchouc soit comprise entre 2000 joules/grammes et 5000 joules/grammes,

B - à la sortie de l'appareil de mélangeage en continu, on abaisse la température de la composition de caoutchouc à une température inférieure à 140°C en moins de 5 minutes.

Préférentiellement, au cours de l'étape A, on incorpore également des additifs, de manière à optimiser l'utilisation du moyen de mélangeage en continu qui comporte un nombre limité de moyens d'introduction

Préférentiellement au cours de l'étape A la vitesse de rotation du rotor est comprise entre 50 et 500 t/min, et plus particulièrement comprise entre 200 et 400 t/min.

Préférentiellement, au cours de l'étape A, le taux de cisaillement théorique maxi ($\dot{\gamma}$) de la composition de caoutchouc dans la chambre de mélangeage est compris entre 15 000 s$^{-1}$ et 40 000 s$^{-1}$.

Préférentiellement, au cours de l'étape A, le taux de remplissage de la chambre de mélangeage est compris entre 5 % et 40%.

Préférentiellement, à l'issue de l'étape B on réalise une composition de caoutchouc finale à l'aide d'un ou plusieurs moyen(s) de mélangeage continu ou discontinu (200, 300) de type mélangeur interne et/ou externe, en incorporant un volume prédéterminé de la composition de caoutchouc initiale, le système de réticulation, ainsi qu'un complément éventuel d'élastomère, de charges et d'additifs, en choisissant les paramètres de fonctionnement du moyen de mélangeage en continu ou discontinu de sorte que l'énergie spécifique complémentaire conférée à la composition de caoutchouc au cours de cette étape soit comprise entre 500 joules/grammes et 1800 joules/grammes.

Les propriétés de la composition sont bien évidemment appréciées une fois que le mélange final est achevé, c'est-à-dire lorsque l'ensemble des composants ont été introduits, lesquels comprennent en particuliers les agents de réticulation.

Pour la bonne compréhension de la description qui suit, l'énergie spécifique conférée à la composition de caoutchouc pendant la durée du processus de fabrication dans un moyen de mélangeage continu ou discontinu, correspond à l'énergie (en joules) fournie au mélange par le moteur (ou les moteurs) servant à faire tourner le rotor (ou les rotors) du mélangeur, divisée par la masse de la composition de caoutchouc réalisée. Cette énergie peut se calculer par les formules suivantes :

$$(\int_0^T P(t)dt) \div (\int_0^T M(t)dt),$$

dans le cas du mélangeage en continu, ou

$$(\int_0^T P(t)dt) \div M,$$

dans le cas du mélangeage en discontinu.
dans laquelle :

- P(t) est la puissance (en watt) instantanée fournie par le moteur (ou les moteurs), diminuée de la puissance consommée par les moyens de transmission entre l'arbre du moteur et l'arbre du rotor,
- M(t) est le débit massique (en grammes/s) instantané de la composition de caoutchouc réalisée à l'aide du mélangeur.
- M est la masse totale (en gramme) de la masse de mélange introduite dans le mélangeur en continu

Ce calcul peut se faire aisément, quel que soit le type de moyen de mélangeage choisi, en mesurant la puissance électrique consommée par le moteur (ou les moteurs) pendant le mélangeage, diminuée de la puissance consommée par l'installation à vide. Les propriétés viscoélastiques d'un matériau sont décrites par des grandeurs physiques telles que le module visqueux (G"), le module élastique (G'), ou encore par le rapport $\dfrac{G''}{G'} = Tg\delta$ qui est la tangente de l'angle de déphasage entre la contrainte et la déformation, lorsque le matériau subit une contrainte sinusoïdale, et qui permet entre autre de caractériser les phénomènes de dissipation à l'intérieur du matériau.

Sans qu'il soit possible d'expliquer tous les phénomènes physiques mis en cause dans le procédé de mise en oeuvre selon l'invention, on observe, comme on le verra par la suite à l'aide des résultats expérimentaux, et pour une large variété de composition de caoutchouc (voir ci-dessous) réalisée à l'aide dudit procédé, une diminution de la valeur de la tangente δ en comparaison de la fabrication du même mélange à l'aide d'un procédé connu de fabrication du type fabrication sur un mélangeur interne et/ou externe seul.

On observe néanmoins que le procédé selon l'invention en raison de sa capacité à fournir à la composition initiale une grande quantité d'énergie pendant un temps très court a aussi pour effet d'élever de manière importante la température de mélangeage.

Aussi, à titre préférentiel, de manière à conférer cette énergie spécifique importante au mélange au cours de l'étape A, on choisira une vitesse de rotation du rotor comprise entre 50 et 500 t/min et plus particulièrement comprise entre 200 et 400 t/min.

De même, et toujours dans le même but, on dimensionnera le diamètre du rotor et le jeu entre le rotor et le stator de l'appareil de mélangeage en continu pour que, au cours de l'étape A, le taux de cisaillement théorique maxi (γ̇) de la composition de caoutchouc en un point quelconque de la chambre de mélangeage (11) soit compris entre 15 000 s$^{-1}$ et 40 000 s$^{-1}$.

On entend par taux de cisaillement théorique maxi γ̇ l'effet du cisaillement obtenu lorsque la composition de caoutchouc est forcée à circuler entre les filets du rotor et le stator, ou entre les pales du mélangeur et la cuve du mélangeur interne ou encore, dans l'entrefer des deux cylindres du mélangeur externe, comme cela sera détaillé dans la suite de la présente description.

Le taux de cisaillement théorique maxi s'exprime par la formule suivante :

$$\dot{\gamma} = (2\Pi * V_P * R) \div (60 * e)$$

dans laquelle :

- $V_p$ est la vitesse de rotation (en tours par minutes) du rotor du mélangeur en continu, des palettes du mélangeur interne ou des cylindres du mélangeur externe,

- R (en m) est le rayon du rotor, des palettes du mélangeur interne ou des cylindres du mélangeur externe et,

- e (en m) est égal au jeu minimal entre les filets du rotor et la surface interne du stator, ou au jeu entre les palettes et la cuve du mélangeur interne ou encore à l'entrefer entre les deux cylindres du mélangeur externe.

On entend par temps de mélangeage le temps mis par l'élastomère pour parcourir la chambre de mélangeage depuis son extrémité amont jusqu'à son extrémité aval dans le cas de l'appareil de mélangeage en continu, ou encore, le temps de présence de l'élastomère dans la cuve de mélangeage, dans le cas d'un mélangeur interne, ou encore le temps de malaxage de l'élastomère dans le cas d'un mélangeur externe.

De manière préférentielle on choisira, au cours de l'étape A, un taux de remplissage de la chambre de mélangeage très inférieur à 100%, et préférentiellement compris entre 5 % et 40 %.

Le taux de remplissage est la part du volume occupé par la composition de caoutchouc dans la chambre de mélangeage, et dont le volume correspond au volume libre disponible entre le rotor et la paroi intérieure du stator, (ou entre les palettes du mélangeur interne et la paroi interne de la cuve).

Enfin, dans le but de ne pas altérer les propriétés physiques conférées à la composition initiale, à l'issue des étapes A et B, on s'arrangera pour dimensionner et faire fonctionner le mélangeur de sorte que, au cours de l'étape de réalisation de la composition finale, l'énergie spécifique fournie au mélange soit comprise dans les limites classiques connues pour obtenir une bonne homogénéité du mélange final et comprise en règle générale entre 500 joules/grammes et 1800 joules/grammes selon d'une part le type de mélangeur qui peut être du type de mélangeur interne ou externe, continu ou discontinu et, d'autre part, selon le temps de malaxage choisi, lequel peut varier entre 1 minute et 30 minutes suivant le type de mélangeur choisi.

Dans le cadre de la présente description, on entend par composition de caoutchouc une composition à base d'au moins un élastomère de préférence diénique tel qu'un caoutchouc naturel ou synthétique, comprenant des charges renforçantes, des additifs, et un système de vulcanisation.

L'élastomère (ou indistinctement "caoutchouc") utilisé est de préférence du type diénique, bien que d'autres élastomères soient utilisables. Par élastomère "diénique", on entend de manière connue un élastomère issu au moins en partie (i.e., un homopolymère ou un copolymère) de monomères diènes (monomères porteurs de deux doubles liaisons carbone-carbone, conjuguées ou non).

L'élastomère diénique choisi appartiendra de préférence au groupe constitué par les polybutadiènes (BR) (notamment ceux ayant un taux de liaisons cis-1,4 supérieur à 90%), les polyisoprènes de synthèse (IR) de préférence du type cis-1,4, le caoutchouc naturel (NR), les copolymères de butadiène, les copolymères d'isoprène et les mélanges de ces élastomères ; de tels copolymères sont choisis plus préférentiellement dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'isobutène et d'isoprène (IIR) et les mélanges de tels copolymères.

Selon d'autres modes de réalisation, l'élastomère diénique peut être aussi constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères.

Toute charge connue pour ses capacités à renforcer une composition de caoutchouc est utilisable comme charge renforçante, par exemple une charge organique telle que du noir de carbone, ou encore une charge inorganique telle que de la silice à laquelle est associé de manière connue un agent de couplage.

Comme noirs de carbone conviennent notamment tous les noirs de carbone conventionnellement utilisés dans les pneumatiques (noirs dits de grade pneumatique). Parmi ces derniers, on citera plus particulièrement les noirs de carbone de grade (ASTM) 100, 200, 300, 600 ou 700 (par exemple N134, N234, N326, N330, N347, N375, N683, N772) et de manière générale des noirs ayant une surface spécifique préférentiellement inférieure à 160 m$^2$ par gramme (mesure CTAB). Comme charges inorganiques renforçantes conviennent notamment des charges minérales du type silice (SiO$_2$), notamment les silices précipitées ou pyrogénées présentant une surface BET inférieure à 450 m$^2$/g, de préférence inférieure à 200 m$^2$/g. Le taux de charge renforçante est de préférence supérieur à 30 pce, par exemple compris entre 40 et 140 pce (pce signifiant parties en poids pour cents parties d'élastomère total).

La composition de caoutchouc est du type réticulable ou réticulée, c'est-à-dire qu'elle comprend par définition un système de réticulation adapté pour permettre la réticulation de la composition lors de sa cuisson (i.e., son durcissement). De préférence, le système de réticulation de la matrice de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce ; l'accélérateur primaire de vulcanisation, par exemple un sulfénamide, est utilisé à un taux préférentiel compris entre 0,5 et 10 pce.

La composition de caoutchouc peut comporter également tout ou partie des additifs habituellement utilisés dans les matrices de caoutchouc destinées à la fabrication de pneumatiques, tels que par exemple des agents de couplage, des agents de protection tels que des agents anti-vieillissement, des antioxydants, des antiozonants, des agents plastifiants ou des huiles d'extension, que ces derniers soient de nature aromatique ou non-aromatique (notamment des huiles très faiblement ou non aromatiques), par exemple du type naphténiques ou paraffiniques, à haute ou de préférence à basse viscosité, des huiles MES ou TDAE, des résines plastifiantes à haute Tg supérieure à 30°C, des agents facilitant la mise en oeuvre (processabilité) des compositions à l'état cru, des résines tackifiantes, des agents antiréversion, des résines renforçantes.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

La description qui suit s'appuie sur un exemple de mise en oeuvre du procédé à l'aide des dispositifs connus, dont on rappellera brièvement le fonctionnement en s'appuyant sur les figures 1 à 4 dans lesquelles :

- la figure 1 représente une vue schématique d'un appareil de mélangeage en continu utilisé dans le cadre du procédé,
- la figure 2 représente une vue schématique d'un mélangeur interne,
- la figure 3 représente une vue schématique d'un mélangeur externe,
- la figure 4 représente une vue schématique des différentes étapes du procédé.

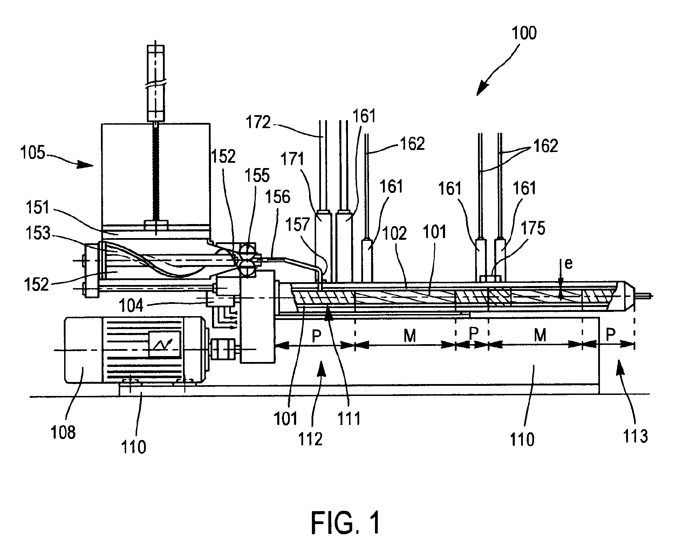

L'appareil de mélangeage en continu représenté schématiquement à la figure 1 est décrit de manière détaillée dans la publication EP 605 781 dont on résumera les éléments pertinents pour la compréhension de l'invention.

L'appareil de mélangeage comporte une chambre 111 de mélangeage à l'intérieur de laquelle tourne un rotor 101. Le côté amont de la chambre de mélangeage est repéré par la référence 112 et le côté aval par la référence 113.

La distance e entre les ailes du rotor 101 et la surface interne du stator 102, est déterminante pour apprécier le taux de cisaillement théorique maxi de la composition de caoutchouc dans la chambre de mélangeage.

Il convient toutefois de remarquer que la valeur maxi du taux de cisaillement fixée à 40 000 s$^{-1}$ dans le cadre de la présente invention représente une valeur théorique. En effet, seuls quelques fragments du mélange subissent ce taux de cisaillement lorsque lesdits fragments sont contraints de passer dans cet entrefer réduit.

Des trémies 105, sont aménagées en amont de la machine pour l'introduction des élastomères de base constituant la composition de caoutchouc initiale. Un pilon 151 peut coulisser verticalement à l'intérieur de chacune des trémies 105 pour forcer l'introduction des élastomères dans l'enceinte 152 dans laquelle tourne un couteau 153, vrillé en hélice. Ce couteau 153 constitue un moyen de déchiquetage des élastomères prélevant des copeaux sur le ou les pains d'élastomère disposés dans la trémie.

Par un moyen mécanique assurant un transfert des granulés ou copeaux, on gave une pompe volumétrique 155, par exemple de type à engrenage. Le pas que fait l'hélice formant le couteau 153 diminue progressivement pour ajouter au transfert des copeaux une action de plastification de plus en plus intense au fur et à mesure que l'on se déplace vers l'entrée de la pompe à engrenage 155.

Les pompes à engrenage 155 sont connectées à des canalisations 156 qui se rassemblent en une seule canalisation 157 pour rejoindre la chambre de mélangeage 111 qui est constituée par le volume disponible entre le rotor 101 et la surface intérieure du stator 102.

Le long du rotor 101, on distingue trois zones dont l'action est d'assurer la propulsion des constituants du mélange (zones P), entre lesquelles on aperçoit des zones distinctes dont l'action est de réaliser essentiellement le mélangeage (zones M) des différents composants de ladite composition de caoutchouc initiale.

D'autres organes de dosage et d'introduction peuvent être répartis le long de la chambre de mélangeage 111 afin d'introduire d'autres constituants dans la composition de caoutchouc initiale à différents endroits le long du cheminement des constituants de base.

De préférence, tous les constituants pâteux sont introduits avec des organes de dosage et d'introduction forcée qui sont, de préférence, des pompes volumétriques. Les constituants pulvérulents sont également introduits avec une pompe volumétrique, en amont de la première zone M, et de préférence juste en aval du point d'introduction de l'élastomère.

Les constituants liquides peuvent être introduits avec une pompe volumétrique pour liquide qui peut être du type à pistons ou de n'importe quel type capable d'assurer une bonne précision volumétrique comme par exemple une pompe à engrenages ou une pompe à palettes.

De façon avantageuse, les additifs, sont pré mélangés, seuls ou avec une très faible quantité d'huile (quelques % de la quantité prévue par la formule de la composition de caoutchouc) de manière à obtenir un produit pâteux. Au besoin, ceux de ces produits qui sont en phase solide à la température ambiante sont d'abord réchauffés pour les liquéfier. Ce mélange pâteux, comme tout autre constituant pâteux éventuel, est de préférence introduit avec une pompe volumétrique (pompe à engrenages, ou à piston par exemple). Avantageusement, on pourra effectuer un regroupement de constituants lorsqu'il y a un grand nombre de constituant,s utilisés chacun en très faible quantité dans la formule de la composition de caoutchouc initiale considérée, en ce que cela conduit à diminuer le nombre d'organes de dosage sur l'appareil mélangeur.

De manière optionnelle, le moyen de mélangeage en continu peut comprendre des organes de dosage et d'introduction 161, 162 réservées aux additifs, ou 171, 172 dédiées aux charges de renforcement, distribués le long de la chambre de mélangeage 111. Ces moyens comprennent une alimentation (161, 171), et un réservoir de stockage (162, 172) situé en amont d'un moyen d'alimentation volumétrique (non représenté) du type pompe à engrenage ou pompe volumétrique refoulant sous pression le composant dans la chambre de mélangeage 111.

La chambre de mélangeage 111, comporte d'amont en aval, une succession de zones où le taux de remplissage est de 100%, précédées d'une zone dont le taux de remplissage est inférieur à 100%. Ceci résulte du fait que l'on introduit des constituants en différents points de la chambre de mélangeage entre l'extrémité amont et l'extrémité aval, et que juste en aval du point d'introduction, pour garantir un parfait respect de la composition à réaliser, on assure une stabilisation du débit en atteignant un taux de remplissage de 100%. Juste avant le point d'introduction, on a donc prévu une zone de propulsion P.

La construction de l'appareil du mélangeage est modulaire et peut comprendre une ou plusieurs zones de simple propulsion P, puis une ou plusieurs zones de mélangeage M.

Signalons cependant que les connaissances en matière de conception des formes des rotors et stators des appareils mélangeurs pour caoutchouc sont assez empiriques. Il faut procéder à des déterminations expérimentales. Quant aux formes de ces outils mélangeurs, la présente invention impose seulement de les choisir pour réaliser des zones de propulsion P et de mélangeage M, de façon à ce que l'on ait des zones où le taux de remplissage est bien inférieur à 100% et des zones distinctes de transfert de la matière, où le taux de remplissage peut être égal à 100%.

Un moyen très simple pour contrôler la valeur du taux de remplissage effectif de la chambre de mélangeage, dans les différentes zones de celle-ci, consiste à arrêter simultanément la rotation du rotor 101 et le fonctionnement de tous les organes de dosage et d'introduction, puis à retirer le rotor hors du stator, ce qui entraîne la matière en place le long du rotor. On peut alors comparer les volumes de matière aux volumes théoriques aux différentes zones voulues, le volume théorique étant celui disponible entre stator et rotor. Une simple inspection visuelle du rotor permettra le plus souvent de voir immédiatement quelles sont les zones où le taux de remplissage est inférieur à 100%.

On peut optimiser le taux de remplissage le long de son axe, pour tenir compte de la très grande évolution du volume occupé par le matériau, au fur et à mesure que les divers constituants sont introduits dans la chambre de mélangeage 111, en jouant de préférence sur la section de passage de la matière, définie par la surface comprise entre le rotor 101 et le stator 102 sur une coupe perpendiculaire à l'axe du rotor, et/ou sur la vitesse de l'écoulement.

Dans le cadre du procédé selon l'invention, on s'arrange alors pour que, dans les zones peu remplies, c'est-à-dire dans lesquelles le taux de remplissage est inférieur à 100%, ledit taux de remplissage soit de préférence compris entre 5 % et 40%, de manière à ce que l'énergie conférée à la composition de caoutchouc tout au long de la circulation de ladite composition dans la chambre de mélangeage soit distribuée le plus régulièrement possible.

Du fait de la grande quantité d'énergie fournie au mélange, la température du mélange peut augmenter de manière importante. Aussi, l'appareil de mélangeage peut utilement comporter une régulation thermique par circulation de fluide à l'intérieur du rotor 101 via le joint tournant 104, et par circulation de fluide dans le stator, voire même autour des canalisations 155 et 156 et autour de l'enceinte 152. On observera alors que l'appareil de mélangeage en continu permet, du fait de la surface spécifique d'échange importante, d'assurer une régulation thermique efficace.

L'appareil de mélangeage est animé en totalité par un seul moteur 108 monté sur le bâti 110. Ce moteur entraîne en rotation le rotor 101, ainsi qu'un arbre de commande sur lequel peuvent être embrayés ou débrayés les organes de dosage et d'introduction forcée. Chaque organe de dosage et d'introduction forcée comporte un réglage qui permet de faire varier la quantité dosée pour une même vitesse de l'arbre de commande.

Aussi, il conviendra de déduire de la puissance délivrée par le moteur 108, la puissance consommée par ces différents organes de dosage via l'arbre de commande, pour déterminer la puissance conférée à la composition de caoutchouc initiale. En pratique, et dans le cadre du moyen utilisé pour la réalisation des plans d'expérience décrits dans la présente demande, la puissance consommée par ces organes est inférieure à 10% de la puissance fournie par le moteur et a été déduite du calcul de la puissance fournie par le moteur comme cela été annoncé plus haut.

Dans un autre choix de réalisation, chaque organe de dosage et d'introduction comporte son propre moteur, ou certains groupes d'organe comportent leur propre moteur, et le fonctionnement de l'ensemble des moteurs de l'appareil est contrôlé par un ordinateur en fonction des données de la composition à réaliser.

Dans le cadre de la mise en oeuvre du procédé selon l'invention, et pour conférer à la composition de caoutchouc initiale l'énergie désirée, le rotor 101 de l'appareil de mélangeage est animé en rotation à une vitesse comprise entre 50 t/min et 500 t/min selon la fluidité des mélanges à réaliser et la longueur de la chambre de mélangeage. De manière usuelle, la vitesse de rotation est comprise entre 200 t/min et 400t/min.

La présente invention et l'exemple de mise en oeuvre décrit ci-dessus prévoient l'utilisation d'un moyen de mélangeage mécanique en continu comprenant un seul rotor et, bien que la présente description n'en présente pas les détails de fonctionnement, l'homme du métier pourra trouver les réglages permettant d'utiliser un moyen de mélangeage en continu comprenant plusieurs rotors dont les filets sont adaptés pour coopérer les uns avec les autres. En effet, il semblerait que seul ce type de moyen soit susceptible, en l'état actuel des connaissances, de conférer au mélange une quantité d'énergie importante en un temps très court. Cet état de fait ne préjuge en rien la possibilité de mettre en oeuvre un procédé de mélangeage mécanique par trituration équivalent et susceptible de conférer au mélange en un temps très court, compris entre 20 et 60 secondes, une énergie spécifique comprise entre 2000 joules/grammes et 5000 joules/grammes.

Le refroidissement de la composition de caoutchouc initiale en sortie de l'appareil de mélangeage en continu peut être réalisé à l'aide de plusieurs moyens connus de l'homme du métier, utilisés seuls ou en combinaison, tels que :

- un outil refroidisseur comprenant deux rouleaux comportant des canaux dans lesquels circule un fluide réfrigérant placés sous la surface des cylindres, et dont l'entrefer réduit permet de calandrer la gomme pour créer une feuille de faible épaisseur
- un bain d'eau réfrigérée dans lequel circule la bande de gomme à refroidir,
- une soufflerie d'air frais.

On observera néanmoins que le dimensionnement des moyens de refroidissement dépend du débit de sortie de la composition de caoutchouc initiale de l'appareil de mélangeage en continu. Ce moyen doit permettre le refroidissement de la composition de caoutchouc finale à une température inférieure à 140°C en un temps inférieur à 5 minutes, de manière à éviter la dégradation de la matrice élastomère lorsqu'elle est maintenue trop longtemps à une température élevée.

La réalisation de la composition de caoutchouc finale se fait de manière plus classique et connue de l'homme du métier.

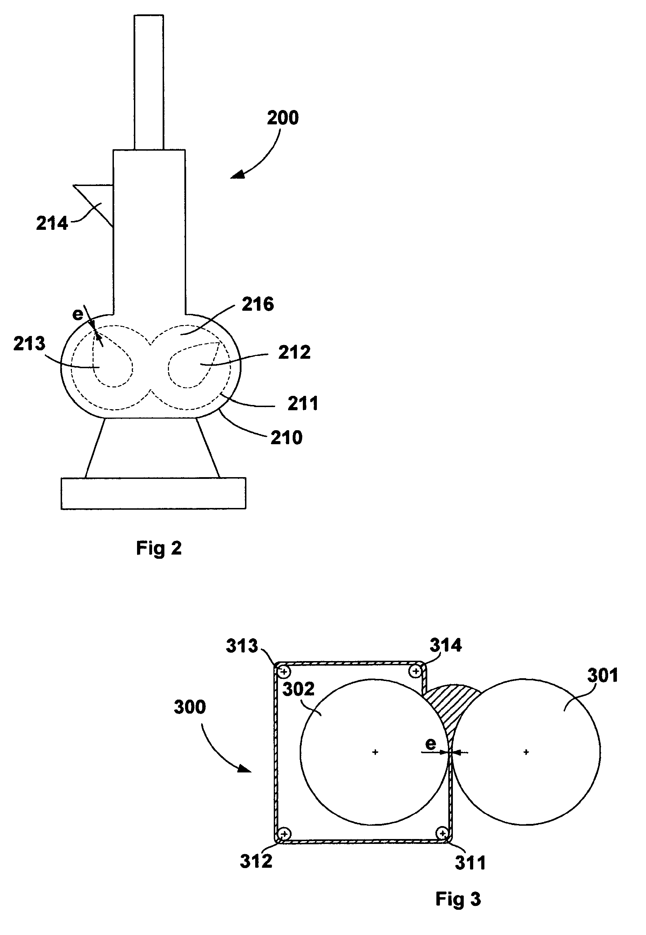

Le mélangeur interne représenté à la figure 2, comporte une cuve 210 dont la surface interne 211 délimite le volume interne 216.

Un moteur (non représenté) anime en rotation des palettes de mélangeage par l'intermédiaire d'un moyen de transmission du type boite à vitesse (non représentée). La puissance consommée par lesdits moyens de transmission est sensiblement constante et peut être évaluée comme cela a été déjà indiqué, en faisant tourner l'installation à vide.

Des moyens d'introduction 214 sont prévus en tête du mélangeur pour introduire les composants.

L'entrefer e correspond à la plus faible distance entre les palettes et la surface interne 211 de la cuve 210. Cette valeur de l'entrefer sert à déterminer la valeur du taux de cisaillement théorique maxi comme cela a déjà été dit précédemment.

De manière connue, ce mélangeur interne comporte également des moyens de régulation thermique permettant de contenir l'augmentation de la température de la composition de caoutchouc finale dans les limites classiquement pratiquées.

Il peut s'avérer nécessaire, si la température de tombée du mélange reste encore trop élevée de prévoir un moyen supplémentaire, du type mélangeur externe sur lequel on procédera à l'introduction du système de réticulation.

Le mélangeur externe 300, de manière également connue, est formé de deux rouleaux 301 et 302 animés en rotation par un moteur (non représenté) via un système de transmission (non représenté). L'écartement e des rouleaux définit l'entrefer. Des rouleaux d'embarrage permettent de faire recirculer le mélange après son passage dans l'entrefer. Les composants sont introduits directement par la partie supérieure des rouleaux.

Ce type de mélangeur, bien qu'il requière un temps de cycle important convient particulièrement bien lorsque l'on désire effectuer un mélangeage à basse température. Il en résulte alors un temps de mélangeage relativement long.

Bien évidemment, il est également possible de réaliser la composition finale à l'aide du moyen de mélangeage en continu en réintroduisant la composition initiale ainsi que le système de réticulation et les composants complémentaires, et en adaptant l'entrefer de la vis et sa vitesses de rotation pour transférer au mélange une énergie spécifique comprise entre 500 joules/grammes et 1800 joules/grammes.

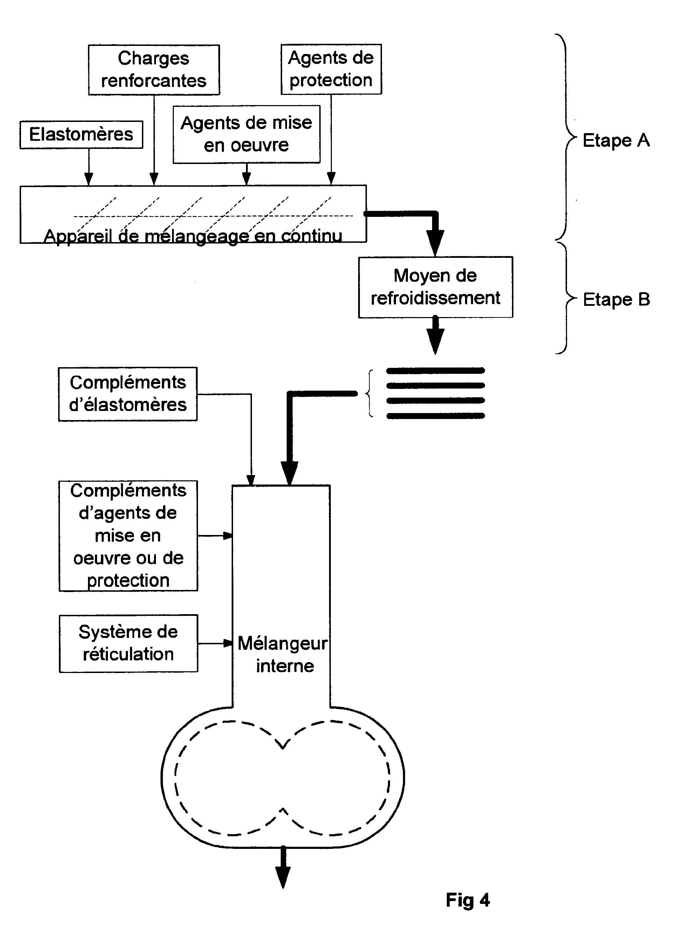

La figure 4 permet de visualiser les étapes du procédé selon l'invention. Une première étape A au cours de laquelle on introduit successivement les élastomères puis les charges renforçantes, juste en aval du point d'introduction des élastomères, et enfin les composants supplémentaires de la formule tels que les additifs.

Compte tenu de la grande quantité d'énergie conférée à la composition de caoutchouc initiale au cours de cette étape A, aucun des composants principaux formant le système de réticulation n'est introduit au cours de cette étape.

La composition de caoutchouc initiale est reprise en sortie de l'appareil de mélangeage en continu par le moyen de refroidissement au cours de l'étape B, au cours de laquelle la température est abaissée en dessous de 140°C en moins de 5 minutes, puis est stockée en attente de la réalisation de la composition finale qui peut être différée dans le temps.

On observera également que l'un des moyens de transmettre la quantité d'énergie à la composition de caoutchouc initiale dans le temps très bref de mélangeage prévu à l'étape A, consiste à augmenter la proportion de charges renforçantes par rapport à la quantité d'élastomères, ce qui a pour effet d'augmenter la viscosité du mélange et d'augmenter la quantité d'énergie fournie par le cisaillement du mélange lors du passage dans l'entrefer du rotor et du stator.

En conséquence de quoi, et si tel est le cas, il est alors nécessaire de rajouter un complément d'élastomères au cours de l'étape de réalisation de la composition finale, de manière à rétablir les proportions imposées par la formulation de la composition de caoutchouc finale.

Comme cela a été indiqué plus haut, l'étape de réalisation de la composition finale se fait à l'aide de moyens de mélangeages classiques dans lequel on introduit un volume prédéterminé de la composition de caoutchouc initiale produite au cours de l'étape A, ainsi que les compléments éventuels d'élastomères et d'additifs.

Lorsque la composition finale est réalisée à l'aide d'un mélangeur interne du type de celui décrit à la figure 2, et lorsque le volume d'élastomère introduit en supplément est important on se rapproche alors de la technique connue dite d'introduction de gommes décalées, et il peut se produire une élévation importante de température nécessitant une étape supplémentaire pour introduire le système de réticulation. Cette introduction peut alors se faire sur un mélangeur externe ou interne dont les conditions de marche ont été adaptées.

Comme cela a déjà été évoqué, pour conférer à la composition de caoutchouc finale la quantité d'énergie désirée, le temps de mélangeage au cours de l'étape de réalisation de la composition finale peut varier de manière importante selon que l'on utilise un mélangeur interne ou un mélangeur externe ou un mélangeur en continu, et l'homme du métier saura effectuer les réglages nécessaires de ces procédés pour atteindre les niveaux de cisaillement et de travail souhaités.

A titre exemplatif, les résultas comparatifs suivants ont été obtenus pour une composition de caoutchouc finale à base de caoutchouc naturel (NR) et de noir de carbone du type :

| Composants | en PCE |
|---|---|
| NR | 100 |
| N234 | 54 |
| 6PPD[1] | 3 |
| Paraffine 6266 | 1 |
| Acide stéarique | 1,5 |
| ZnO | 3 |
| CBS[2] | 1,2 |
| Soufre | 1,2 |
| (1) Santoflex 6PPD fourni par la Sté Flexsys (2) Santocure CBS fourni par la Sté Flexsys | |

Les résultats témoins sont obtenus à l'aide d'un procédé témoin de mise en oeuvre classique du type mélangeur interne et externe (introduction du système de réticulation) dont les principaux paramètres de fonctionnement sont résumés ci après :

| Mélangeur interne | |
|---|---|
| Volume de la cuve | $3332 cm^3$ |
| Temps de mélangeage | 214 sec |
| Température du mélange à la tombée | 165°C |
| Coefficient de remplissage | 70% |
| Energie spécifique fournie | 721 J/g |
| Valeur théorique maxi du cisaillement | $177 s^{-1}$ |
| Vitesse des palettes | 50rpm |

| Mélangeur externe | |
|---|---|
| Temps de mélangeage | 600 sec |
| Entrefer | 2mm |
| Diamètre des cylindres | 300 mm |

(suite)

| Mélangeur externe | |
| --- | --- |
| Vitesse cylindre 1 | 15 T/min |
| Vitesse cylindre 2 | 20 T/min |

La composition de caoutchouc finale améliorée a été obtenue avec le procédé selon l'invention dont les principaux paramètres de fonctionnement sont résumés ci-après

| Appareil de mélangeage en continu (Etape A) | |
| --- | --- |
| Vitesse de rotation du rotor | 340 rpm |
| Energie spécifique fournie | 3370 J/g |
| Valeur théorique maxi du cisaillement | 30 000 s$^{-1}$ |

| Outil de refroidissement de type bain de refroidissement (Etape B) | |
| --- | --- |
| Température du bain | 40°C |
| Temps de séjour dans le bain | 2,5 min |

| Mélangeur interne composition finale | |
| --- | --- |
| Temps de mélangeage | 227 sec |
| Température de la composition de caoutchouc finale à la tombée | 166°C |
| Coefficient de remplissage | 70% |
| Energie spécifique fournie | 958 J/g |
| Valeur théorique du cisaillement | 248 s$^{-1}$ |
| Vitesse des palettes | 50 et 70 rpm |

| Mélangeur externe composition finale | |
| --- | --- |
| Temps de mélangeage | 600 sec |
| Entrefer | 2mm |
| Diamètre des cylindres | 300 mm |
| Vitesse cylindre 1 | 15 T/min |
| Vitesse cylindre 2 | 20 T/min |

Les valeurs comparatives (en base 100) suivantes ont été obtenues :

| | Procédé témoin | Procédé selon l'invention |
| --- | --- | --- |
| Module à 100 | 100 | 107 |
| Module à 300 | 100 | 127 |
| Module à 300/Module à 100 | 100 | 119 |
| Tangente $\delta_{max}$ | 100 | 85 |

On entend par module à 100 (à 300) le module d'élongation à 100% (à 300%) d'une éprouvette réalisée avec la composition de caoutchouc, après vulcanisation à 150°C.

Ces mesures sont effectuées conformément à la norme française NFT 46-002 de septembre 1988 qui prévoit la mesure en première élongation (i.e. sans cycle d'accommodation - les modules sont alors notés M) des modules sécants vrais (i.e. calculés en se ramenant à la section réelle de l'éprouvette), exprimés en MPa, à 100% et à 300% d'allongement. Ces mesures de traction sont effectuées dans les conditions normales de température et d'hygrométrie (23°C +/- 2°C, 50 +/- 5 % d'humidité relative ; norme française NF T 40-01 de décembre 1979).

Les propriétés dynamiques (tangente $\delta$) sont mesurées sur un viscoanalyseur (Metravib VA4000), selon la norme ASTM D5992-96. On enregistre la réponse d'un échantillon de la composition de caoutchouc vulcanisée (éprouvette cylindrique de 2mm d'épaisseur et de 315 mm$^2$ de section), soumis à une sollicitation sinusoïdale en cisaillement simple alterné, à la fréquence de 10Hz, à une température de 23°C. On effectue un balayage en amplitude de déformation crête à crête de 0,1% à 50% (cycle aller) puis de 50% à 0,1% (cycle retour) ; pour le cycle retour, on enregistre la valeur maximale du facteur de perte noté tan $\delta_{max}$.

D'autres essais ont été réalisés à l'aide d'une composition de caoutchouc finale à base d'élastomère de type SBR et de noir de carbone du type :

| Composants | en PCE |
|---|---|
| SBR[1] | 100 |
| N234 | 54 |
| 6PPD[2] | 3 |
| Paraffine 6266 | 1 |
| Acide stéarique | 1,5 |
| ZnO | 3 |
| CBS[3] | 1,2 |
| Soufre | 1,2 |
| (1) SBR solution avec 24% de motifs polybutadiène 1-2, 46% de motifs polybutadiène 1-4, 27% de styrène ; Tg -48°C (Tg déterminée sur l'élastomère par DSC). (2) Santoflex 6PPD fourni par la Sté Flexsys (3) Santocure CBS fourni par la Sté Flexsys. | |

Les résultats témoins sont obtenus à l'aide d'un procédé témoin de mise en oeuvre classique du type mélangeur interne et externe (introduction du système de vulcanisation) dont les principaux paramètres de fonctionnement sont résumés ci après :

| Mélangeur interne | |
|---|---|
| Volume de la cuve | 422 cm$^3$ |
| Temps de mélangeage | 2min 40s |
| Température du mélange à la tombée | 165°C |
| Coefficient de remplissage | 75% |
| Energie spécifique fournie | 1200J/g |
| Valeur théorique maxi du cisaillement | 270 s$^{-1}$ |
| Vitesse des palettes | 70 T/min |

| Mélangeur externe | |
|---|---|
| Temps de mélangeage | 600 sec |
| Entrefer | 2mm |
| Diamètre des cylindres | 200 mm |

(suite)

| Mélangeur externe | |
| --- | --- |
| Vitesse cylindre 1 | 15 T/min |
| Vitesse cylindre 2 | 20 T/min |

La composition de caoutchouc finale améliorée a été obtenue avec le procédé selon l'invention dont les principaux paramètres de fonctionnement sont résumés ci-après

| Appareil de mélangeage en continu (Etape A) | |
| --- | --- |
| Vitesse de rotation du rotor | 280 T/min |
| Energie spécifique fournie | 3920 J/g |
| Valeur théorique maxi du cisaillement | 25000 s$^{-1}$ |

| Outil de refroidissement de type bain de refroidissement (Etape B) | |
| --- | --- |
| Température du bain | 40°C |
| Temps de séjour | 2,5 min |

| Mélangeur interne composition finale | |
| --- | --- |
| Temps de mélangeage | 2min 40s |
| Température de la composition de caoutchouc finale à la tombée | 170°C |
| Coefficient de remplissage | 75% |
| Energie spécifique fournie | 1400 J/g |
| Valeur théorique maxi du cisaillement | 300 s$^{-1}$ |
| Vitesse des palettes | 80 T/min |

| Mélangeur externe composition finale | |
| --- | --- |
| Temps de mélangeage | 600 sec |
| Entrefer | 2mm |
| Diamètre des cylindres | 200 mm |
| Vitesse cylindre 1 | 15 T/min |
| Vitesse cylindre 2 | 20 T/min |

Les valeurs comparatives (en base 100) suivantes ont été obtenues :

| | Procédé témoin | Procédé selon l'invention |
| --- | --- | --- |
| Module à 100 | 100 | 86 |
| Module à 300 | 100 | 103 |
| Module à 300/Module à 100 | 100 | 120 |
| Tangente $\delta_{max}$ | 100 | 78 |

Dans les deux cas, on observe une nette diminution de la valeur de tangente $\delta_{max}$, et une augmentation de l'indice de renforcement, définit comme le rapport entre le module à 300% et le module à 100%.

**Revendications**

1. Procédé de fabrication d'une composition de caoutchouc comprenant divers constituants tels que des élastomères de base, des charges renforçantes, des additifs et un système de vulcanisation, au cours duquel on effectue les étapes suivantes :

A - à l'aide d'un appareil de mélangeage en continu (100) comprenant une chambre de mélangeage (111) comportant au moins un rotor (101) en rotation dans un stator (102) et s'étendant entre une extrémité amont (112) et une extrémité aval (113) entre lesquelles la matière chemine progressivement,
comportant des organes de dosage et d'introduction forcée du ou des élastomères de base, refoulant lesdits élastomères de base au travers d'une canalisation débouchant à l'amont de la chambre de mélangeage (111), on réalise une composition de caoutchouc initiale comprenant des charges de renforcement, et éventuellement d'autres composants, à l'exception du système de réticulation, en choisissant les paramètres de fonctionnement de l'appareil de mélangeage en continu de sorte que :

a - le temps de séjour de l'élastomère dans la chambre de mélangeage (111) soit compris entre 20 et 60 secondes,
b - l'énergie spécifique conférée à la composition de caoutchouc soit comprise entre 2000 joules/grammes et 5000 joules/grammes,

B - à la sortie (113) de la composition de caoutchouc initiale de la chambre de mélangeage (111), on abaisse la température de ladite composition de caoutchouc initiale à une température inférieure à 140°C en moins de 5 minutes.

2. Procédé selon la revendication 1 dans lequel, au cours de l'étape A, on incorpore également des additifs.

3. Procédé selon la revendication 1 dans lequel, au cours de l'étape A la vitesse de rotation du rotor (101) est comprise entre 50 et 500 t/min.

4. Procédé selon la revendication 1 dans lequel, au cours de l'étape A la vitesse de rotation du rotor (101) est comprise entre 200 et 400 t/min.

5. Procédé selon la revendication 1 dans lequel, au cours de l'étape A, le taux de cisaillement théorique maxi ($\dot{\gamma}$) de la composition de caoutchouc dans la chambre de mélangeage (111) est compris entre 15 000 s$^{-1}$ et 40 000 s$^{-1}$.

6. Procédé selon la revendication 1 dans lequel, au cours de l'étape A, le taux de remplissage de la chambre de mélangeage (111) est compris entre 5 % et 40%.

7. Procédé selon l'une des revendications 1 à 6 dans lequel, à l'issue de l'étape B on réalise une composition de caoutchouc finale à l'aide d'un ou plusieurs moyen(s) de mélangeage continu ou discontinu (200, 300) de type mélangeur interne et/ou externe, en incorporant un volume prédéterminé de la composition de caoutchouc initiale, le système de réticulation, ainsi qu'un complément éventuel d'élastomère, de charges et d'additifs, en choisissant les paramètres de fonctionnement du moyen de mélangeage en continu ou discontinu (200, 300) de sorte que l'énergie spécifique complémentaire conférée à la composition de caoutchouc au cours de cette étape soit comprise entre 500 joules/grammes et 1800 joules/grammes.

**Patentansprüche**

1. Verfahren zur Herstellung einer Kautschukzusammensetzung, die verschiedene Bestandteile wie Basiselastomere, verstärkende Füllstoffe, Zusatzstoffe und ein Vulkanisationssystem enthält, während dessen die folgenden Schritte ausgeführt werden:

A - mit Hilfe eines Geräts zum kontinuierlichen Mischen (100), das eine Mischkammer (111) enthält, die mindestens einen Rotor (101) aufweist, der sich in einem Stator (102) dreht und sich zwischen einem vorderen Ende (112) und einem hinteren Ende (113) erstreckt, zwischen denen das Material sich progressiv fortbewegt, das Dosierelemente und Elemente zur erzwungenen Einführung des oder der Basiselastomere aufweist, die die Basiselastomere durch eine vor der Mischkammer (111) mündende Kanalisierung hindurch fördern, wird

12

eine Ausgangskautschukzusammensetzung hergestellt, die verstärkende Füllstoffe und ggf. andere Bestandteile enthält, mit Ausnahme des Vernetzungssystems, indem die Betriebsparameter des Geräts zum kontinuierlichen Mischen so gewählt werden, dass:

a - die Aufenthaltszeit des Elastomermaterials in der Mischkammer (111) zwischen 20 und 60 Sekunden liegt, b - die der Kautschukzusammensetzung
verliehene spezifische Energie zwischen 2000 Joule/Gramm und 5000 Joule/Gramm liegt,

B - beim Austritt (113) der Ausgangskautschukzusammensetzung aus der Mischkammer (111) die Temperatur der Ausgangskautschukzusammensetzung in weniger als 5 Minuten auf eine Temperatur von weniger als 140°C gesenkt wird.

2. Verfahren nach Anspruch 1, wobei während des Schritts A ebenfalls Zusatzstoffe hinzugefügt werden.

3. Verfahren nach Anspruch 1, wobei während des Schritts A die Drehgeschwindigkeit des Rotors (101) zwischen 50 und 500 U/min liegt.

4. Verfahren nach Anspruch 1, wobei während des Schritts A die Drehgeschwindigkeit des Rotors (101) zwischen 200 und 400 U/min liegt.

5. Verfahren nach Anspruch 1, wobei während des Schritts A der maximale theoretische Schergrad ($\dot{\gamma}$) der Kautschukzusammensetzung in der Mischkammer (111) zwischen 15 000 s$^{-1}$ und 40 000 s$^{-1}$ liegt.

6. Verfahren nach Anspruch 1, wobei während des Schritts A der Füllgrad der Mischkammer (111) zwischen 5% und 40% liegt.

7. Verfahren nach einem der Ansprüche 1 bis 6, wobei nach Ablauf des Schritts B eine endgültige Kautschukzusammensetzung mit Hilfe einer oder mehrerer Einrichtungen zur kontinuierlichen oder diskontinuierlichen Mischung (200, 300) von der Art innerer und/oder äußerer Mischer hergestellt wird, indem ein vorbestimmtes Volumen der Ausgangskautschukzusammensetzung, das Vernetzungssystem, sowie ein möglicher Zusatz von Elastomermaterial, Füllstoffen und Zusatzstoffen eingearbeitet werden, indem die Betriebsparameter der Einrichtung zur kontinuierlichen oder diskontinuierlichen Mischung (200, 300) so gewählt werden, dass die der Kautschukzusammensetzung während dieses Schritts verliehene zusätzliche spezifische Energie zwischen 500 Joule/Gramm und 1800 Joule/Gramm liegt.

**Claims**

1. Process for the manufacture of a rubber composition comprising various constituents, such as base elastomers, reinforcing fillers, additives and a vulcanization system, during which the following stages are carried out:

A - using a continuous mixing device (100) comprising a mixing chamber (111) comprising at least one rotor (101) rotating in a stator (102) and extending between an upstream end (112) and a downstream end (113), between which the material gradually advances, and comprising appliances for the metering and
forced introduction of the base elastomer or elastomers, driving back the said base elastomers through a pipeline emerging upstream of the mixing chamber (111), a starting rubber composition comprising reinforcing fillers and optionally other components, with the exception of the crosslinking system, is produced, the operating parameters for the continuous mixing device being chosen so that:

a - the residence time of the elastomer in the mixing chamber (111) is between 20 and 60 seconds,
b - the specific energy conferred on the rubber composition is between 2000 joules/gram and 5000 joules/gram,

B - at the outlet (113) for the starting rubber composition from the mixing chamber (111), the temperature of the said starting rubber composition is lowered to a temperature of less than 140°C in less than 5 minutes.

2. Process according to Claim 1, in which, during stage A, additives are also incorporated.

3. Process according to Claim 1, in which, during stage A, the rotational speed of the rotor (101) is between 50 and 500 rev/min.

4. Process according to Claim 1, in which, during stage A, the rotational speed of the rotor (101) is between 200 and 400 rev/min.

5. Process according to Claim 1, in which, during stage A, the maximum theoretical shear rate $(\dot{\gamma})$ of the rubber composition in the mixing chamber (111) is between 15 000 s$^{-1}$ and 40 000 s$^{-1}$.

6. Process according to Claim 1, in which, during stage A, the degree of filling of the mixing chamber (111) is between 5% and 40%.

7. Process according to one of Claims 1 to 6, in which, on conclusion of stage B, a final rubber composition is produced using one or more continuous or batchwise mixing means (200, 300) of internal and/or external mixer type, a predetermined volume of the starting rubber composition, the crosslinking system and also any remaining elastomer, fillers and additives being incorporated, the operating parameters for the continuous or batchwise mixing means (200, 300) being chosen so that the additional specific energy conferred on the rubber composition during this stage is between 500 joules/gram and 1800 joules/gram.

FIG. 1

**Fig 2**

**Fig 3**

Charges
renforcantes

Agents de
protection

Elastomères

Agents de mise
en oeuvre

Etape A

Appareil de mélangeage en continu

Moyen de
refroidissement

Etape B

Compléments
d'élastomères

Compléments
d'agents de
mise en
oeuvre ou de
protection

Système de
réticulation

Mélangeur
interne

**Fig 4**

**EP 2 561 010 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 605781 A